# EUROPEAN PATENT APPLICATION

(11) **EP 4 632 581 A1**
(43) Date of publication of application: **15.10.2025**
(21) Application number: 23909358.6
(22) Date of filing: 14.09.2023
(51) Int. Cl.: G06F 11/22

(54) **FAULT DETECTION METHOD AND COMPUTER DEVICE**

(30) Priority: 29.12.2022 CN 202211715921
(71) Applicant: xFusion Digital Technologies Co., Ltd., Zhengzhou, Henan 450046 (CN)
(72) Inventor: CHEN, Gang, Zhengzhou, Henan 450046 (CN)
(74) Representative: MERH-IP Matias Erny Reichl Hoffmann Patentanwälte PartG mbB
(86) International application number: PCT/CN2023/118911
(87) International publication number: WO 2024/139423

(57) **Abstract**

Embodiments of the present application provide a fault detection method and a computer device, which relate to the field of computer technologies. The method includes: obtaining a fault information table, where the fault information table is configured to indicate a correspondence between a plurality of pieces of hardware and a register, and a register corresponding to each piece of hardware is associated with fault information of at least one piece of hardware; and based on the fault information table, obtaining fault information of first hardware fed back by a register corresponding to the first hardware, where the fault information of the first hardware is stored in a register corresponding to the first hardware, and the first hardware is any one of the plurality of pieces of hardware. The fault information table is generated based on an indication of a user, the fault information table includes the correspondence between the plurality of pieces of hardware and the register of a server, and a register corresponding to each piece of hardware is associated with the fault information of the at least one piece of hardware. Therefore, during fault detection, a register corresponding to hardware may be determined based on the fault information table, and all fault information may be obtained through the corresponding register, thereby effectively improving efficiency of the fault detection.

## Description

This application claims priority to the Chinese Patent Application No. 202211715921.7, filed with the China National Intellectual Property Administration on December 29, 2022 and entitled "FAULT DETECTION METHOD AND COMPUTER DEVICE", which is incorporated herein by reference in its entirety.

### TECHNICAL FIELD

The present application relates to the field of computer technologies, and in particular, to a fault detection method and a computer device.

### BACKGROUND

Currently, a server performs fault detection by itself during a startup process. For example, a basic input/output system (basic input output system, BIOS) pre-configures a register that stores fault information of hardware in the server. However, with increasing fault diagnosis requirements from users, when the server detects faults, the pre-configured register fails to identify newly emerged faults of the server, thereby resulting in partial failure of hardware fault detection. Therefore, how to successfully detect faults of the server is a pressing problem that needs to be solved.

### SUMMARY

Embodiments of the present application provide a fault detection method and a computer device, which solves the problem of how to successfully detect faults of a server.

In a first aspect, a fault detection method is provided. The method includes: obtaining a fault information table, where the fault information table is configured to indicate a correspondence between a plurality of pieces of hardware and a register, and a register corresponding to each piece of hardware is associated with fault information of at least one piece of hardware; and based on the fault information table, obtaining fault information of first hardware fed back by a register corresponding to the first hardware, where the fault information of the first hardware is stored in the register corresponding to the first hardware, and the first hardware is any one of the plurality of pieces of hardware.

A fault information table obtained by a processor from a management controller is generated based on an indication of a user. The fault information table includes the correspondence between the plurality of pieces of hardware and the register of the server, and the register corresponding to each piece of hardware is associated with the fault information of the at least one piece of hardware. Therefore, during fault detection, a register corresponding to faulty hardware may be determined based on the fault information table, and all fault information of the faulty hardware may be obtained through the corresponding register, thereby effectively improving efficiency of the fault detection. In other words, in the embodiment of the present application, added fault diagnosis requirements of the user may be obtained through the fault information table, which may ensure quality of the fault detection, ensure that faults that need to be detected are detected, and effectively improve the efficiency of the fault detection.

In combination with the first aspect, in a possible implementation, the fault information table and a flag bit are obtained, and the flag bit is configured to check the fault information table; and when the fault information table is successfully checked, the fault information of the first hardware fed back by the register corresponding to the first hardware is obtained.

The flag bit of the fault information table may be configured to check whether the fault information table obtained by the processor from the management controller has been tampered with. When the fault information table is successfully checked, it indicates that the obtained fault information table has not been tampered with, and the fault information of the first hardware may be obtained by using the fault information table. When the fault information table fails to be checked, it indicates that the obtained fault information table has been tampered with, and the fault information of the first hardware fed back by the register corresponding to the first hardware cannot be obtained by using the tampered fault information table, thereby avoiding an incorrect detection result caused by detecting a fault of the first hardware by using a tampered fault information table.

In combination with the first aspect, in another possible implementation, whether the fault information table is the same as a first fault information table stored in a computer device is determined; and when the fault information table is different from the first fault information table stored in the computer device, the fault information table is updated into the computer device.

When the fault information of the first hardware fed back by the register corresponding to the first hardware in the fault information table is the same as fault information stored in the register corresponding to the first hardware, the fault information of the first hardware fed back by the register corresponding to the first hardware in the fault information table does not need to be updated into the register corresponding to the first hardware, which may simplify a detection process and improve detection efficiency.

In combination with the first aspect, in another possible implementation, the fault information table further includes information about the register, and the information about the register includes a register type, a register bit width, and a register parameter.

The fault information table includes different registers, and the different registers store fault information of different pieces of hardware. When the different fault information of the different pieces of hardware is stored in the different registers, register types, register bit widths, and register parameters of the register need to be considered for distinguishing the different fault information stored in the different registers.

In a second aspect, a fault detection method is provided, where a computer device includes a management controller and a processor, the method is performed by the management controller, and the method includes: generating a correspondence between a plurality of pieces of hardware and a register to form a fault information table, where a register corresponding to each piece of hardware is associated with fault information of at least one piece of hardware; and sending the fault information table to the processor.

Since the fault information table is generated by the management controller based on an indication of a user, the fault information table may be dynamically configured based on user requirements. This enables a register included in the fault information table to be associated with all fault information of the hardware, thereby improving efficiency of fault detection and shortening time required for detection.

In combination with the second aspect, in a possible implementation, based on fault information of first hardware indicated by the user, fault information associated with a register corresponding to the first hardware is updated to obtain an updated correspondence, where the first hardware is any one of the plurality of pieces of hardware, and the updated correspondence is sent to the processor.

The user may configure the fault information table in the management controller and dynamically increase fault information stored in a register according to a fault diagnosis requirement. Since the management controller is completely independent of an operating system of the computer device, updating the fault information table in the management controller does not affect operation of the operating system of the computer device, and the computer device does not need to be restarted. This, in turn, shortens detection time and improves efficiency of fault detection.

In a third aspect, a fault detection apparatus is provided, where the fault detection apparatus includes an obtaining module.

The obtaining module is configured to obtain a fault information table, where the fault information table is configured to indicate a correspondence between a plurality of pieces of hardware and a register, and a register corresponding to each piece of hardware is associated with fault information of at least one piece of hardware.

The obtaining module is further configured to, based on the fault information table, obtain fault information of first hardware fed back by a register corresponding to the first hardware. The fault information of the first hardware is stored in the register corresponding to the first hardware, and the first hardware is any one of the plurality of pieces of hardware.

In combination with the third aspect, in a possible implementation, the obtaining module is specifically configured to obtain the fault information table and a flag bit, where the flag bit is configured to check the fault information table; and when the fault information table is successfully checked, obtain the fault information of the first hardware fed back by the register corresponding to the first hardware.

In combination with the third aspect, in another possible implementation, the obtaining module is further configured to determine whether the fault information table is the same as a first fault information table stored in a computer device; and when the fault information table is different from the first fault information table stored in the computer device, update the fault information table into the computer device.

In a fourth aspect, a fault detection apparatus is provided, where the fault detection apparatus includes a generating module and a sending module.

A configuration module is configured to generate a correspondence between a plurality of pieces of hardware and a register to form a fault information table, where a register corresponding to each piece of hardware is associated with fault information of at least one piece of hardware.

The sending module is configured to send the fault information table to a processor.

In combination with the fourth aspect, in a possible implementation, the configuration module is further configured to, based on fault information of first hardware indicated by a user, update fault information associated with a register corresponding to the first hardware to obtain an updated correspondence, where the first hardware is any one of the plurality of pieces of hardware, and send the updated correspondence to the processor.

In a fifth aspect, a server is provided, where the server includes a management controller, a processor, and a storage. The management controller is configured to generate a correspondence between a plurality of pieces of hardware and a register to form a fault information table, where a register corresponding to each piece of hardware is associated with fault information of at least one piece of hardware, and configure the correspondence between the plurality of pieces of hardware and the register to the processor. The management controller, when executing a set of computer instructions, performs functions of various modules in the method in the second aspect or in any one possible implementation of the second aspect. The processor is configured to obtain the fault information table; and based on the fault information table, obtain fault information of first hardware fed back by a register corresponding to the first hardware, where the fault information of the first hardware is stored in the register corresponding to the first hardware, and the first hardware is any one of the plurality of pieces of hardware; and the processor, when executing the set of computer instructions, performs functions of various modules in the method in the first aspect or in any one possible implementation of the first aspect.

In a sixth aspect, a computer-readable storage medium including computer software instructions is provided. When the computer software instructions run on a computer, the computer is enabled to perform the method in the first aspect or in the any one possible implementation of the first aspect.

In a seventh aspect, a computer-readable storage medium including computer software instructions is provided. When the computer software instructions run on a computer, the computer is enabled to perform the method in the second aspect or in the any one possible implementation of the second aspect.

In an eighth aspect, a computer program product including instructions is provided. When the computer program product runs on a computer, the computer is enabled to perform the method in the above first aspect or in any one implementation of the first aspect.

In a ninth aspect, a computer program product including instructions is provided. When the computer program product runs on a computer, the computer is enabled to perform the method in the above second aspect or in any one implementation of the second aspect.

On the basis of implementations provided in the above aspects, the embodiment of the present application may make a further combination to provide more implementations.

### BRIEF DESCRIPTION OF DRAWINGS

FIG. 1 is a schematic diagram of a system architecture according to an embodiment of the present application;
FIG. 2 is a flowchart of a fault detection method according to an embodiment of the present application;
FIG. 3 is a schematic diagram of a BMC interface according to an embodiment of the present application;
FIG. 4 is a flowchart of checking a fault information table according to an embodiment of the present application;
FIG. 5 is a schematic diagram of a fault detection method according to an embodiment of the present application;
FIG. 6 is a specific flowchart of a fault detection method according to an embodiment of the present application;
FIG. 7 is a schematic diagram of a selection interface according to an embodiment of the present application;
FIG. 8 is a structural diagram of a fault detection apparatus according to an embodiment of the present application; and
FIG. 9 is a structural diagram of a computer device according to an embodiment of the present application.

### DESCRIPTION OF EMBODIMENTS

Embodiments of the present application provide a fault detection method, that is, obtaining a fault information table, where the fault information table is configured to indicate a correspondence between a plurality of pieces of hardware and a register, and a register corresponding to each piece of hardware is associated with fault information of at least one piece of hardware; and based on the fault information table, obtaining fault information of first hardware fed back by a register corresponding to the first hardware, where the fault information of the first hardware is stored in a register corresponding to the first hardware, and the first hardware is any one of the plurality of pieces of hardware. A fault information table obtained by a processor from a management controller is generated based on an indication of a user. The fault information table includes the correspondence between the plurality of pieces of hardware and the register of a server, and a register corresponding to each piece of hardware is associated with the fault information of the at least one piece of hardware. Therefore, during fault detection, a register corresponding to faulty hardware may be determined based on the fault information table, and all fault information of the faulty hardware may be obtained through the corresponding register, thereby effectively improving efficiency of the fault detection.

The following, in combination with accompanying drawings, provides a detailed description of an implementation of the embodiment of the present application.

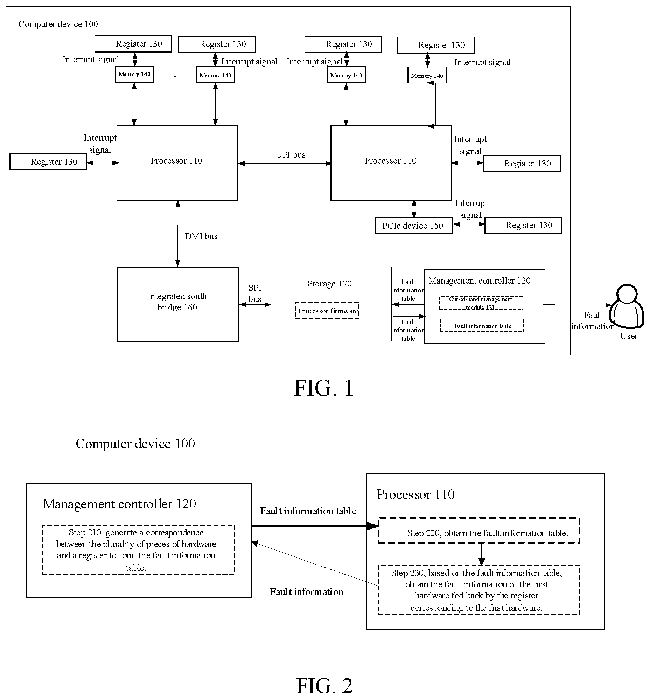

FIG. 1 is a schematic diagram of a system architecture according to an embodiment of the present application. The architectural diagram is an illustrative example of a computer device. As shown in FIG. 1, a computer device 100 may include a plurality of processors 110, a management controller 120, a plurality of registers 130, a plurality of memories 140, a high-speed serial computer expansion bus (peripheral component interconnect express, PCIE) device 150, an integrated south bridge (Platform Controller Hub, PCH) 160, and a storage 170. The plurality of processors 110 are connected by an Ultra Path Interconnect (Ultra Path Interconnect, UPI) bus, a processor 110 accesses a memory 140 via a memory channel, the processor 110 is connected to the PCIE device 150 via a PCIE interface, the processor 110 is connected to the integrated south bridge 160 via a Direct Media Interface (Direct Media Interface, DMI) bus, the DMI bus is configured to connect the processor and a south bridge, the integrated south bridge 160 is connected to the storage 170 by a full-duplex synchronous serial (Serial Peripheral Interface, SPI) bus, and the SPI bus is configured for communication between a micro-processing control unit and a peripheral device. The storage 170 is connected to the management controller 120 based on an interaction protocol.

The storage 170 may include a volatile memory (volatile memory), such as a random access memory (random access memory, RAM). The storage 170 may further include a non-volatile memory (non-volatile memory), such as a read-only memory (read-only memory, ROM), a flash memory, an HDD, or an SSD. The storage 170 stores processor firmware and executable code, and the processor 110 and the management controller 120 execute the executable code to perform the above fault detection method.

The processor firmware (also known as a processor firmware program) may be firmware (Firmware), a Basic Input/Output System (basic input output system, BIOS), a Management Engine (management engine, ME), microcode, or an Intelligent Management Unit (intelligent management unit, IMU). A specific form of the processor firmware is not limited in the embodiment of the present application, and the above is only illustrative description. In a following embodiment, the processor firmware being the BIOS is taken as an example for description.

The processor 110 may run the processor firmware, that is, obtain the fault information table from the management controller 120, where the fault information table indicates a correspondence between hardware and the register, and different registers indicate different fault information, based on the correspondence in the fault information table, determine at least one register that records the fault information of the first hardware, obtain the fault information of the first hardware from the at least one register, and send the fault information of the first hardware to the management controller 120, so as to assist the user in identifying a hardware fault. The first hardware may be a central processing unit (central processing unit, CPU), memory, or a high-speed serial computer expansion bus (peripheral component interconnect express, PCIE) device.

For example, the processor 110 runs the processor firmware, and obtains the fault information table from the management controller 120, where the fault information table indicates a register corresponding to the processor 110, the memory 140, and the PCIE device 150. When a fault occurs in the processor 110, the memory 140, or the PCIE device 150, an interrupt signal is sent to a corresponding register, which in turn enables the register to output fault information, collect the fault information, and send the fault information to the management controller 120.

The management controller 120 includes an out-of-band management module 121. The out-of-band management module may be a management unit of a non-service module. For example, the out-of-band management module may perform remote maintenance and management on the computer device via a dedicated data channel. The out-of-band management module is completely independent of an operating system of the computer device, and may communicate with the Basic Input/Output System and the operating system (Operating System, OS) by an out-of-band management interface of the computer device.

For example, the out-of-band management module may include a monitoring management unit outside the computer device, a management system in a management chip outside the processor, a baseboard management controller (Baseboard Management Controller, BMC) of the computer device, a System Management Module (system management mode, SMM), etc. It should be noted that a specific form of the out-of-band management module is not limited in the embodiment of the present application, and the above is only illustrative description. In a following embodiment, the out-of-band controller being the BMC is taken as an example for description.

The BMC is an out-of-band management module that is completely independent of the operating system of the computer device and may communicate with the BIOS and the operating system via the out-of-band management interface of the computer device.

It should be noted that different companies have different names for the BMC in computer devices. For example, it is called the BMC by some companies, iLO by some companies, and iDRAC by other companies. Whether it is called the BMC, the iLO, or the iDRAC, it may be understood as the BMC in the embodiment of the present application.

The out-of-band management module 121 is configured to generate the correspondence between the plurality of pieces of hardware and the register based on the indication of the user, form the fault information table, and configure the correspondence between the plurality of pieces of hardware and the register to the processor 110, and may further present fault information obtained by the processor 110 to the user, assisting the user in intuitively identifying a hardware fault.

When new fault information is added for the first hardware, the new fault information of the first hardware may be updated to a register corresponding to the first hardware based on the indication of the user, or the new fault information of the first hardware may be updated to another register based on the indication of the user. When the new fault information of the first hardware is updated to another register, a correspondence between the first hardware and the register in the fault information table further needs to be updated. Since the correspondence between the first hardware and the register is stored in the management controller 120, the management controller 120 is completely independent of the operating system of the computer device. Therefore, in the embodiment of the present application, when the new fault information is added, the management controller 120 may directly update the correspondence between the first hardware and the register in the fault information table, and send an updated fault information table to the processor 110. The processor 110 may determine a register that records the fault information of the first hardware based on the updated fault information table, and obtain complete fault information without a need to restart the computer device, thereby avoiding interruption of a service running on the computer device.

For example, the out-of-band management module performs a certain step (such as a following step 210) in a following embodiment, which may be understood that: the management controller invokes the out-of-band management module to perform the step.

The BIOS and the BMC communicate by EDMA. The EDMA is an important technology for rapid data exchange in a digital signal processor, featuring a capability of background batch data communication independent of the CPU. In the embodiment of the present application, the EDMA includes two regions: B2H (BMC to Host) and H2B (Host to BMC). The B2H refers to a block used by the BMC to transmit data (that is, fault information) to the BIOS, and the H2B refers to a block used by the BIOS to transmit data (that is, fault information) to the BMC.

A register 130 is configured to store the fault information of the first hardware and feed back the fault information of the first hardware, that is, when an interrupt signal sent by the first hardware is received, a corresponding bit is triggered and corresponding fault information is output. The register 130 may be a machine specific register (Machine Specific Registers, MSR), a configuration space register (Configuration Space Registers, CSR), or a memory-mapped I/O (Memory-mapped I/O, MMIO). It should be noted that a specific form of the register in the embodiment of the present application is not limited, and the above is only illustrative description.

The memory 140 is an important component of a computer system, that is, a bridge for communication between an external storage (further known as an auxiliary storage) and the CPU. The memory is used to temporarily store operational data in the CPU and data exchanged between the CPU and the external storage such as a hard disk. For example, a computer starts to run, and loads data that needs to be operated from the memory into the CPU for operation. After the operation is completed, the CPU stores an operation result to the memory.

The PCIE device 150 expands, via the PCIE interface, various types of extended devices, such as a GPU (Graphics Processing Unit), that may be connected by the PCIE interface. The PCIE device may enhance a data processing capability of the computer device.

The integrated south bridge 160 is responsible for controlling some peripheral interfaces such as an I/O interface, the PCIE device, an additional function, etc.

The system architecture and the application scenarios described in the embodiment of the present application are intended to illustrate the technical solutions of the embodiment of the present application more clearly, and do not construe a limitation on the technical solutions according to the embodiment of the present application. A person of ordinary skills in the art may understand that as the system architecture evolves and new service scenarios emerge, the technical solutions according to the embodiment of the present application are equally applicable to similar technical issues.

The following describes the fault detection method in detail in combination with the accompanying drawings. FIG. 2 is a flowchart of a fault detection method according to an embodiment of the present application. Here, the processor 110 and the management controller 120 shown in FIG. 1 is taken as an example for description.

Step 210, the management controller generates a correspondence between the plurality of pieces of hardware and a register and forms the fault information table.

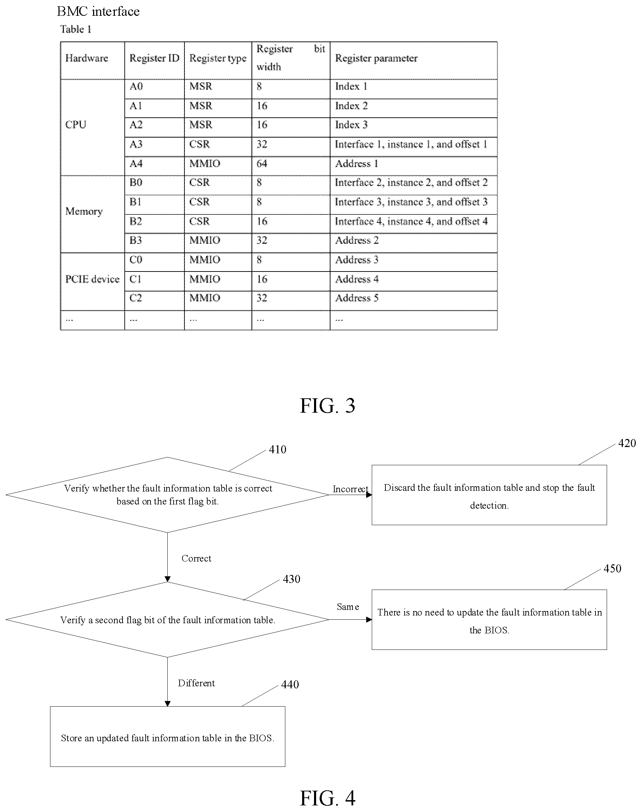

A BMC interface is shown in FIG. 3. The user may dynamically configure the fault information table on the BMC interface according to a requirement. The fault information table is configured to indicate the correspondence between the plurality of pieces of hardware and the register. The fault information table includes different registers, and the different registers store fault information of different pieces of hardware. When the different fault information of the different pieces of hardware is stored in the different registers, register types, register bit widths, and register parameters need to be considered for distinguishing the different fault information stored in the different registers.

For example, Table 1 is a fault information table configured by the user in the BMC interface. Types of registers may be categorized into a machine specific register (Machine Specific Registers, MSR), a configuration space register (Configuration Space Registers, CSR), and a memory-mapped I/O (Memory-mapped I/O, MMIO). The machine specific register may be configured to indicate partial faults of the CPU, the configuration space register may be configured to indicate partial faults of the CPU and partial faults of the memory, and a memory-mapped I/O register may be configured to indicate a fault of a high-speed serial expansion bus (peripheral component interconnect express, PCIE) device and partial faults of the memory. Registers with different types, parameters, and bit widths store different failure information of different pieces of hardware. A register bit width may be 8 bits, 16 bits, 32 bits, or 64 bits.

**Table 1**

| Hardware | Register ID | Register type | Register bit width | Register parameter |
|---|---|---|---|---|
| CPU | A0 | MSR | 8 | Index 1 |
| | A1 | MSR | 16 | Index 2 |
| | A2 | MSR | 16 | Index 3 |
| | A3 | CSR | 32 | Interface 1, instance 1, and offset 1 |
| | A4 | MMIO | 64 | Address 1 |
| Memory | B0 | CSR | 8 | Interface 2, instance 2, and offset 2 |
| | B1 | CSR | 8 | Interface 3, instance 3, and offset 3 |
| | B2 | CSR | 16 | Interface 4, instance 4, and offset 4 |
| | B3 | MMIO | 32 | Address 2 |
| PCIE device | C0 | MMIO | 8 | Address 3 |
| | C1 | MMIO | 16 | Address 4 |
| | C2 | MMIO | 32 | Address 5 |
| ... | ... | ... | ... | ... |

For example, registers that record fault information of the CPU are A0, A1, A2, A3, and A4. The registers A0, A1, A2, A3, and A4 include all fault information of the CPU, and different registers indicate different fault information of the CPU. A CPU fault may be bad CPU pin contact, malfunction of a CPU temperature measuring apparatus, a CPU power supply fault, or a CPU frequency reduction fault. The register A0 indicates the bad CPU pin contact and the malfunction of the CPU temperature measuring apparatus, the register A1 indicates the CPU power supply fault, and the register A3 indicates the CPU frequency reduction fault. Other fault information included in a register is not listed here one by one.

In another embodiment, after the BIOS collects fault information of hardware of the computer device and sends the fault information of the hardware of the computer device to the BMC, the BMC may adaptively adjust fault information stored in a register, and update a correspondence between the hardware and the register, that is, the fault information table.

In an implementation, when the BIOS detects new fault information in the hardware of the computer device, the user may update the fault information table in the BMC interface, or the BMC may adaptively adjust the fault information table. For example, when the BIOS detects new fault information in the memory, the BIOS may store the fault information in a register corresponding to the memory, or in a register corresponding to other hardware. When the fault information is stored in the register corresponding to the memory, a register parameter of the register in the fault information table is updated. When the fault information is stored in the register corresponding to the other hardware, the register corresponding to the memory in the fault information table is updated.

The user may configure the fault information table in the BMC and dynamically increase fault information stored in a register according to a diagnosis requirement. Since the BMC is completely independent of the operating system of the computer device, updating the fault information table in the BMC does not affect the operation of the operating system of the computer device, and the computer device does not need to be restarted. This, in turn, shortens the detection time and improves the efficiency of the fault detection.

Step 220, the processor obtains the fault information table.

The BIOS needs to verify the fault information table after obtaining the fault information table from the BMC. The BIOS verifies validity and a version of the fault information table based on a flag bit of the fault information table. The validity indicates whether the fault information table is correct. As shown in FIG. 4, the BIOS obtains the fault information table and a corresponding first flag bit and a second flag bit from the BMC, and verifies whether the fault information table is correct based on the first flag bit (that is, step 410 is performed). When the first flag bit is not a first preset value, it indicates that the fault information table is incorrect, the fault information table is discarded, and the fault detection is stopped (that is, step 420 is performed). When the first flag bit is the first preset value, it indicates that the fault information table is correct, and a second flag bit of the fault information table is verified (that is, step 430 is performed).

When the second flag bit of the fault information table is different from the second flag bit of a fault information table stored in the BIOS, it indicates that the user has updated the fault information table, and an updated fault information table is stored in the BIOS (that is, step 440 is performed), and at least one register that records the fault information of the first hardware is determined from the updated fault information table. When the second flag bit of the fault information table is the same as the second flag bit of the fault information table stored in the BIOS, it indicates that the user has not updated the fault information table, and there is no need to update the fault information table in the BIOS (that is, step 450 is performed). The fault information table stored in the BIOS may be used to determine the at least one register that records the fault information of the hardware. Consequently, when the hardware performs fault self-detection and generates an interrupt signal, where the interrupt signal may include a fault type sent by the hardware, the interrupt signal is directly sent to a determined register, and the register records the fault type via the interrupt signal.

After the computer device is powered on, the BIOS instructs the hardware to perform a power-on self-test to detect whether there is a hardware fault in the computer device, thereby ensuring that the hardware can function properly. The hardware includes a CPU, a memory, a mainboard, and a PCIE device. When a fault is detected on a piece of hardware in the computer device, a self-detection program triggers the hardware to generate an interrupt signal.

The interrupt signal is an alarm signal generated after the computing device detects a hardware fault, and is used to indicate an abnormality in the computer device. The interrupt signal may include a conventional interrupt (Interrupt, INT), a system management interrupt (System Management Interrupt, SMI), a message signaled interrupt (Message Signaled Interrupt, MSI), a non-maskable interrupt (Non-Maskable Interrupt, NMI), or other interrupt signals used to indicate a hardware fault in the computer device, which is not specifically limited in the embodiment of the present application.

In an example, a self-detection of server hardware is performed by using a Machine Check Architecture (Machine-Check Architecture, MCA), and an interrupt signal is sent when a hardware fault is detected. A hardware fault detected by the Machine-Check Architecture may be a system bus fault, a memory fault, a parity check fault, a cache fault, or a translation lookaside buffer fault. These hardware faults may damage stability of the computer device and are irrecoverable. However, these hardware faults are inevitable in a large-scale server environment such as a server cluster or a cloud computing environment. Therefore, in the embodiment of the present application, when the hardware fault is detected, the interrupt signal is generated and sent to a corresponding register, and fault information of faulty hardware is obtained from the corresponding register, so that the user may repair the hardware based on the fault information.

Step 230, the processor, based on the fault information table, obtains the fault information of the first hardware fed back by the register corresponding to the first hardware.

A register corresponding to hardware sets a corresponding bit based on an interrupt signal issued by the hardware. Each bit is used to indicate different fault information. When the bit in the register is set, it indicates that a fault corresponding to the bit exists in the first hardware, and the BIOS obtains fault information indicated by the bit. The BIOS sends obtained fault information to the BMC, and the obtained fault information is displayed on the BMC interface, so that the user may intuitively understand the fault of the computer device.

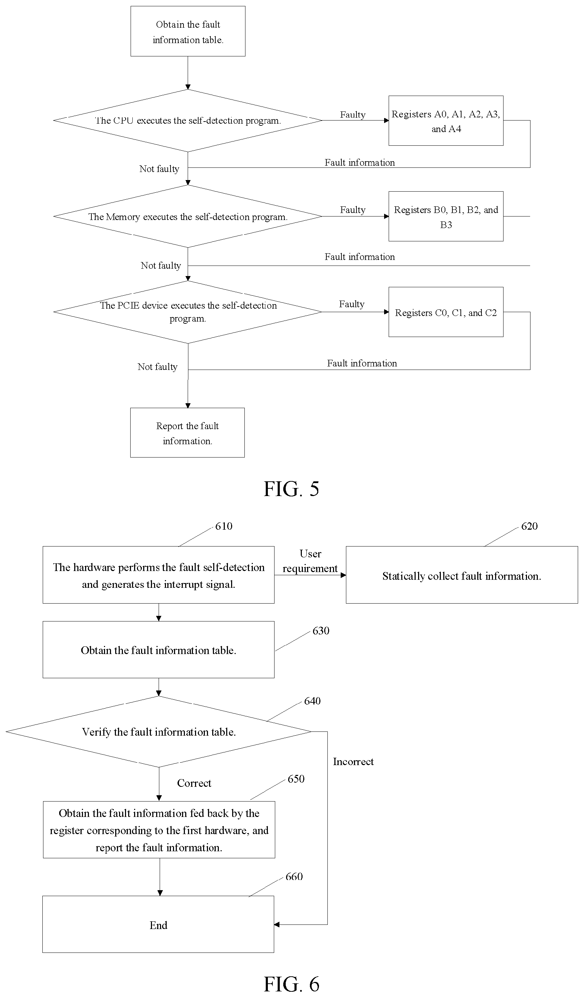

FIG. 5 is a schematic diagram of a fault detection method according to an embodiment of the present application. According to the fault information table, registers corresponding to the CPU are determined to be A0, A1, A2, A3, and A4, where A0, A1, A2, A3, and A4 include all fault information of the CPU, registers corresponding to the memory are B0, B1, B2, and B3, and registers corresponding to the PCIE device are C0, C1, and C2. After the BIOS obtains the fault information table, the CPU executes the self-detection program, and issues an interrupt signal to a corresponding register when a fault is detected in the CPU, thereby obtaining corresponding fault information. The BIOS collects the fault information of the CPU, and instructs the memory to execute the self-detection program. When no fault exists on the CPU, the BIOS directly instructs the memory to execute the self- detection program to obtain corresponding fault information, and instructs the PCIE device to execute the self-detection program to obtain corresponding fault information. The BIOS reports the fault information to the BMC, allowing the user to repair the hardware fault based on the fault information.

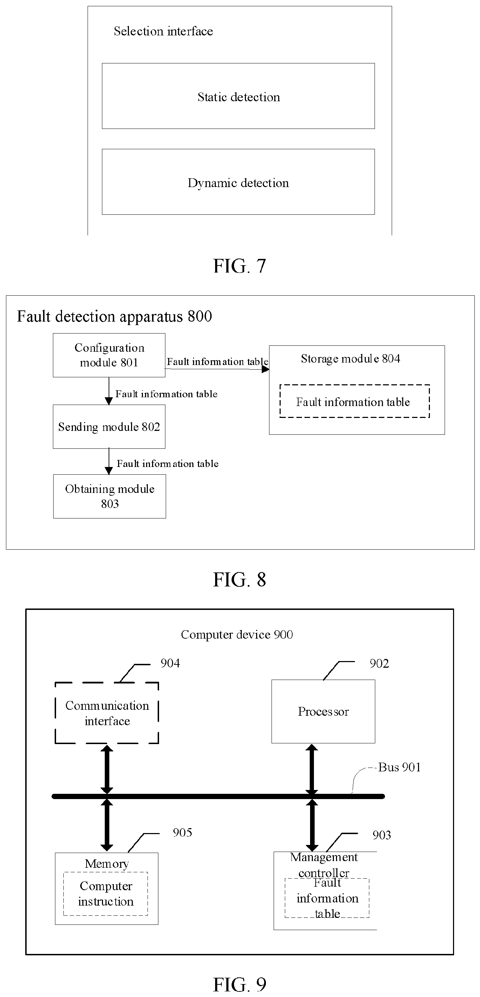

FIG. 6 is a specific flowchart of a fault detection method according to an embodiment of the present application. In another implementation, a correspondence between hardware and a register is pre-configured in the BIOS. When the hardware performs the fault self-detection and generates the interrupt signal (that is, step 610 is performed), fault information may be statically collected according to a user requirement (that is, step 620 is performed). As shown in FIG. 7, the computer device displays a selection interface, and the selection interface includes two options: static detection and dynamic detection. When the user selects the static detection, it indicates that the pre-configured register may meet a user requirement for detecting the hardware fault, and may trigger a corresponding register corresponding to the hardware directly by the interrupt signal, thereby obtaining the corresponding fault information. When the user selects the dynamic detection, it indicates that the pre-configured register may not meet the user requirement for detecting the hardware fault. The BIOS obtains the fault information table from the BMC (that is, step 630 is performed), verifies the fault information table (that is, step 640 is performed), obtains the fault information fed back by the register corresponding to the first hardware, reports the fault information (that is, step 650 is performed), and ends the fault detection (that is, step 660 is performed).

It is understandable that, in order to implement the functions of the above embodiment, the computer includes a corresponding hardware structure and/or software module for performing various functions. It should be readily apparent to a person skilled in the art that the units and method steps of various examples described with the embodiment disclosed in the embodiment of the present application may be implemented by hardware, or a combination of hardware and computer software in the embodiment of the present application. Whether a particular function is performed by hardware or software driving the hardware depends on a specific application scenario and design constraints of the technical solution.

FIG. 8 is a structural diagram of a fault detection apparatus according to an embodiment of the present application. The fault detection apparatus may be configured to implement the functions of the computer device in the method embodiments, and therefore may further achieve the beneficial effects of the method embodiment. In the embodiment of the present application, the fault detection apparatus may be the computer device 100 as shown in FIG. 1.

As shown in FIG. 8, a fault detection apparatus 800 includes a configuration module 801 and a sending module 802. The fault detection apparatus 800 is configured to implement the function of the computer device 100 in the method embodiment shown in the above FIG. 2.

When the fault detection apparatus 800 is configured to implement the function of the computer device 100 in the method embodiment shown in the FIG. 2:

The configuration module 801 is configured to generate a correspondence between a plurality of pieces of hardware and a register to form a fault information table, where a register corresponding to each piece of hardware is associated with fault information of at least one piece of hardware.

The sending module 802 is configured to send the fault information table to a processor.

The configuration module 801 is further configured to: based on fault information of first hardware indicated by a user, update fault information associated with a register corresponding to the first hardware to obtain an updated correspondence, where the first hardware is any one of the plurality of pieces of hardware, and send the updated correspondence to the processor.

The fault detection apparatus 800 further includes an obtaining module 803.

The obtaining module 803 is configured to obtain the fault information table, where the fault information table is configured to indicate the correspondence between the plurality of pieces of hardware and the register, and the register corresponding to each piece of hardware is associated with the fault information of the at least one piece of hardware.

The obtaining module 803 is further configured to obtain the fault information of the first hardware fed back by the register corresponding to the first hardware, where the fault information of the first hardware is determined by the register corresponding to the first hardware based on an interrupt signal of the first hardware, and the first hardware is any one of the plurality of pieces of hardware.

The obtaining module 803 is further configured to: obtain the fault information table and a flag bit, where the flag bit is configured to check the fault information table; and when the fault information table is successfully checked, obtain the fault information of the first hardware fed back by the register corresponding to the first hardware.

The obtaining module 803 is further configured to determine whether the fault information table is the same as a first fault information table stored in the computer device; and when the fault information table is different from the first fault information table stored in the computer device, update the fault information table into the computer device.

The fault detection apparatus 800 further includes a storage module 804. The storage module 804 is configured to store the fault information table.

For more detailed description of the above configuration module 801, sending module 802, obtaining module 803, and storage module 804, reference may be made directly to the relevant description in the method embodiment shown in FIG. 2, which will not be repeated here.

FIG. 9 provides a computer device. A computer device 900 shown in FIG. 9 may be specifically configured to implement a function of the fault detection apparatus 800 in the embodiment shown in the above FIG. 8.

The computer device 900 includes a bus 901, a processor 902, a management controller 903, a communication interface 904, and a storage 905. The processor 902, the management controller 903, the storage 905, and the communication interface 904 communicate with each other via the bus 901. The bus 901 may be a Peripheral Component Interconnect (peripheral component interconnect, PCI) bus or an Extended Industry Standard Architecture (extended industry standard architecture, EISA) bus, etc. A bus may be divided into an address bus, a data bus, a control bus, and other buses. For ease of illustration, only a single bold line is used in FIG. 9, but it does not indicate that there is only one bus or one type of bus. The communication interface 904 is configured for external communication, for example, receiving a user instruction.

The processor 902 may be a central processing unit (central processing unit, CPU), where the processor 902 is configured to obtain a fault information table; instruct a plurality of pieces of hardware to perform the fault self-detection, and a register corresponding to each piece of hardware in the plurality of pieces of hardware; and obtain fault information of a first hardware fed back by a register corresponding to the first hardware. The management controller 903 is configured to generate a correspondence between the plurality of pieces of hardware and a register, where the register corresponding to each piece of hardware is associated with fault information of at least one piece of hardware; and configure the correspondence between the plurality of pieces of hardware and the register to a processor. The management controller 903 may include a monitoring management unit outside the computer device, a management system in a management chip outside the processor, a baseboard management controller (baseboard management controller, BMC) of the computer device, and a System Management Module (system management mode, SMM). A storage 906 may include a volatile memory (volatile memory), such as a random access memory (random access memory, RAM). A memory 909 may further include a non-volatile memory (non-volatile memory), such as a read-only memory (read-only memory, ROM), a flash memory, an HDD, or an SSD.

The storage 905 stores executable code, and the processor 902 and the management controller 903 execute the executable code to implement the above fault detection method.

Specifically, in a case that the embodiment shown in FIG. 8 is implemented, and various modules described in the embodiment in FIG. 8 are implemented by software, the storage 905 stores software or program code required to implement functions of the configuration module 801, the sending module 802 and the obtaining module 803 in FIG. 8. The processor 902 and the management controller 903 are configured to execute an instruction stored in the storage 905, to perform a fault detection method applied to the fault detection apparatus 800.

An embodiment of the present application further provides a computer-readable storage medium including instructions. When running on a computer, the computer-readable storage medium enables the computer to implement the fault detection method applied to the above fault detection apparatus 800.

An embodiment of the present application further provides a computer program product. When the computer program product is executed by a computer, the computer performs any one of the above methods. The computer program product may be a software installation package, and when any one of the above methods needs to be used, the computer program product may be downloaded and executed on the computer.

It should be further noted that the apparatus embodiments described above are merely illustrative, where units described as separate components may or may not be physically separate, and components displayed as units may or may not be physical units, that is, they may be located in one place or distributed over a plurality of network units. Some or all of modules may be selected according to actual requirements for achieving the objectives of the solution of the embodiment. In addition, in drawings of the apparatus embodiments provided by the embodiments of the present application, a connection between modules indicates that there is a communication connection therebetween, which may be specifically implemented as one or more communication buses or signal lines.

Through the description of the above implementations, a person skilled in the art may clearly understand that the embodiments of the present application may be implemented by software in combination with necessary general hardware, and of course, may further be implemented by dedicated hardware, including a dedicated integrated circuit, a dedicated CPU, a dedicated storage, a dedicated component, etc. In general, any function performed by a computer program may be readily implemented by using hardware, and specific hardware structures configured to implement a same function may be diverse, such as an analog circuit, a digital circuit, or a dedicated circuit, etc. However, for the embodiments of the present application, in more cases, a software program is a better implementation. Based on this understanding, the technical solutions of the embodiments of the present application, essentially, or a part that contributes to the related art, may be embodied in a form of a software product. A computer software product is stored in a readable storage medium, such as a computer floppy disk, a USB flash drive, a portable disk, a ROM, a RAM, a magnetic disk, or an optical disc, etc. The computer software product includes several instructions that are used to enable a computer device (a personal computer, a training device, or a network device, etc.) to implement the methods described in the embodiments of the present application.

Some or all of the above embodiments may be implemented by software, hardware, firmware, or any combination thereof. When implemented by software, some or all of the embodiments may be implemented in a form of a computer program product.

The computer program product includes one or more computer instructions. When the computer program instruction is loaded and executed on the computer, processes or functions in the embodiments of the present application are generated in whole or in part. The computer may be a general-purpose computer, a special-purpose computer, a computer network, or another programmable device. The computer instruction may be stored in the computer-readable storage medium or transmitted from one computer-readable storage medium to another computer-readable storage medium. For example, the computer instruction may be transmitted from a website, computer, training device, or data center to another website, computer, training device, or data center by wired means (such as a coaxial line, an optical fiber, or a digital subscriber line (DSL)), or by wireless means (such as infrared, radio, microwave, etc.). The computer-readable storage medium may be any available medium that provides storage for the computer, or a data storage device integrating one or more available media, such as a training device or a data center. The available medium may be a magnetic medium such as a floppy drive, a drive, or a tape, an optical medium such as a DVD, or a semiconductor medium such as a solid state disk (Solid State Disk, SSD).

## Claims

1. A fault detection method, comprising:
obtaining a fault information table, wherein the fault information table is configured to indicate a correspondence between a plurality of pieces of hardware and a register, and a register corresponding to each piece of hardware is associated with fault information of at least one piece of hardware; and
based on the fault information table, obtaining fault information of first hardware fed back by a register corresponding to the first hardware, wherein the fault information of the first hardware is stored in the register corresponding to the first hardware, and the first hardware is any one of the plurality of pieces of hardware.

2. The method according to claim 1, wherein obtaining the fault information table comprises:
obtaining the fault information table and a flag bit, wherein the flag bit is configured to check the fault information table; and
when the fault information table is successfully checked, obtaining the fault information of the first hardware fed back by the register corresponding to the first hardware.

3. The method according to claim 1 or 2, wherein the method is applied to a computer device, and the method further comprises:
determining whether the fault information table is the same as a first fault information table stored in the computer device; and
when the fault information table is different from the first fault information table stored in the computer device, updating the fault information table into the computer device.

4. The method according to any one of claims 1 to 3, wherein the fault information table further comprises information about the register, and the information about the register comprises a register type, a register bit width, and a register parameter.

5. A fault detection method, wherein a computer device comprises a management controller and a processor, the method is performed by the management controller, and the method comprises:
generating a correspondence between a plurality of pieces of hardware and a register to form a fault information table, wherein a register corresponding to each piece of hardware is associated with fault information of at least one piece of hardware; and
sending the fault information table to the processor.

6. The method according to claim 5, wherein the method further comprises:
based on fault information of first hardware indicated by a user, updating fault information associated with a register corresponding to the first hardware to obtain an updated correspondence, wherein the first hardware is any one of the plurality of pieces of hardware; and
sending the updated correspondence to the processor.

7. A computer device, comprising a management controller and a processor, wherein the management controller is configured to:
generate a correspondence between a plurality of pieces of hardware and a register to form a fault information table, wherein a register corresponding to each piece of hardware is associated with fault information of at least one piece of hardware; and
send the correspondence between the plurality of pieces of hardware and the register to the processor; and
the processor is configured to: obtain the fault information table from the management controller; and
based on the fault information table, obtain fault information of first hardware fed back by a register corresponding to the first hardware, wherein the fault information of the first hardware is stored in the register corresponding to the first hardware, and the first hardware is any one of the plurality of pieces of hardware.

8. The computer device according to claim 7, wherein the management controller is further configured to:
based on fault information of the first hardware indicated by a user, update fault information associated with the register corresponding to the first hardware to obtain an updated correspondence; and
send the updated correspondence to the processor.

9. The computer device according to claim 7 or claim 8, wherein the processor is further configured to:
obtain the fault information table and a flag bit, wherein the flag bit is configured to check the fault information table;
when the fault information table is successfully checked, obtain the fault information of the first hardware fed back by the register corresponding to the first hardware.

10. The computer device according to any one of claims 7 to 9, wherein the processor is further configured to:
determine whether the fault information table is the same as a first fault information table stored in the computer device; and
when the fault information table is different from the first fault information table stored in the computer device, update the fault information table into the computer device.
